# EUROPEAN PATENT APPLICATION

(11) **EP 1 391 486 A1**
(43) Date of publication of application: **25.02.2004**
(21) Application number: 02722894.9
(22) Date of filing: 30.04.2002
(51) Int. Cl.: C09D 11/00, B41M 5/00, B41J 2/01

(54) **DECOLORING INK FOR INK JET PRINGING AND INK JET PRINTING METHOD USING IT**

(30) Priority: 27.04.2001 JP 2001131923
(71) Applicant: Ajinomoto Co., Inc., Tokyo 104-8315 (JP); Space Environmental Technology Company, Inc., Tokyo 105-0004 (JP)
(72) Inventor: TSUYOSHI, Naoko Ajinomoto Co., Inc., Kawasaki-shi, Kanagawa 210-8681 (JP); FUDOU, Ryosuke Ajinomoto Co., Inc., Kawasaki-shi, Kanagawa 210-8681 (JP); YAMANAKA, Shigeru, Ajinomoto Co., Inc., Kawasaki-shi, Kanagawa 210-8681 (JP); FURUNAGA, T. Space Environmental Technology Co.Ltd, Minato-ku, Tokyo 105-0004 (JP); SATO, Kimiko Space Environmental Technology Co.Ltd, Minato-ku, Tokyo 105-0004 (JP); KONDO, Yoshiyuki, Koshoku-shi, Nagano 387-0011 (JP)
(74) Representative: Strehl Schübel-Hopf & Partner
(86) International application number: PCT/JP2002/004313
(87) International publication number: WO 2002/088265

(57) **Abstract**

An inclusion of an ang-khak pigment enables printed characters and/or images to be preserved as long as they are kept in the dark, but they are quickly decolored on exposure to visible light and/or ultraviolet light when they are no longer needed.

## Description

### FIELD OF THE INVENTION

The present invention relates to a decolorable ink for inkjet printing, which is rapidly decolored by the irradiation of visible and/or ultraviolet light, and an inkjet printing method using such a decolorable ink.

### BACKGROUND OF THE INVENTION

Recently, it has become important to reuse and recycle used papers in offices, etc. for the purpose of the conservation of forest resources and the reduction of wastes. Usually, used papers such as printed matters, copied papers, facsimiled papers, etc. are rarely reused in offices. Though part of them are collected and processed to recycled papers, most of them are incinerated because of secret matters recorded therein, etc. The reuse of papers in offices is preferable, but it requires that letters and images easily disappear from printed papers.

From these viewpoints, various methods for reusing printed or copied papers by erasing prints are proposed. For example, JP 2000-218898 A discloses a method using inks decolorable by a heat treatment. JP 7-149039 A discloses a method using papers with particular coatings and inks decolored by the dissolution or decomposition of pigments contained in the inks by a heat treatment or the irradiation of light. JP 7-90209 A discloses a method using a combination of recording liquids containing particular compounds and papers with particular coatings. JP 11-194546 A discloses a method for removing by ultraviolet rays images formed on image-forming media comprising photocatalyst-containing coatings. However, these methods are disadvantageous in needing special papers and equipments, lack in flexibility.

It is thus desired to provide a method for erasing letters and images from plain papers with prints only by using output machines such as usual printers, copiers, facsimile machines, etc., so that the printed papers can be recycled. Necessary for this purpose are decolorable inks making it possible to erase letters and images easily.

As an irreversibly decolorable or discolorable ink, for instance, JP 5-51548 A discloses an ink composition comprising an organoborate of a cyanine pigment, which is decomposed and thus decolored by the irradiation of near infrared light, and an ammonium organoborate. However, this ink composition has a problem that it is not sufficiently decolored when exposed to fluorescent lamps usually used in offices, etc. In addition, because repeatedly used papers with decolorable inks are directly handled by human hands, and because such papers should be used until their lives dictate recycling for other uses, the decolorable inks should be safe for humans and their recycling process should be harmless for the environment and easy. Thus, natural pigments produced by microorganisms are preferable as decolorable inks.

As a decolorable ink containing natural pigments, for instance, JP 11-80631 A discloses a decolorable ink composition comprising pigments produced by microorganisms in the *Janthinobacterium* genus. Pigments produced by *Janthinobacterium* have various colors from indigo to violet blue. However, the prints of decolorable inks with color variations need natural pigments with various hues.

If inks decolorable by visible and/or ultraviolet light were used in easy-to-operate inkjet printers for high-speed printing, which are widely used in offices and homes, papers would be able to be used repeatedly, preferable for the conservation of forest resources. Decolorable inks for full-color printing are particularly desired.

### OBJECT OF THE INVENTION

Accordingly, an object of the present invention is to provide an ink for inkjet printing containing a natural pigment produced by microorganisms, which is decolored by the irradiation of visible and/or ultraviolet light.

Another object of the present invention is to provide an inkjet printing method using such an ink.

### DISCLOSURE OF THE INVENTION

As a result of intensive research in view of the above objects, the inventors have found that an ink for inkjet printing decolored by the irradiation of visible and/or ultraviolet light can be obtained by using pigments produced by the strains of *Monascus* sp. The present invention has been completed based on this finding.

Thus, the decolorable ink of the present invention for inkjet printing contains a *Monascus* pigment.

The inkjet printing method of the present invention uses the above inkjet-printing decolorable ink.

The *Monascus* pigment is preferably a composition containing both a water-soluble pigment and an oil-soluble pigment, which can produce both aqueous ink and oil ink. The *Monascus* pigment can be separated to water-soluble pigments and oil-soluble pigments; the water-soluble pigments are dissolved in water and/or water-soluble organic solvents to provide excellent aqueous inks, and the oil-soluble pigments are dissolved in organic solvents to provide excellent oil inks. Among the *Monascus* pigments, monascorubrin has good coloring and is rapidly decolored with high sensitivity to pH. Therefore, it is preferable to use a pigment composition containing monascorubrin.

The decolorable inkjet ink of the present invention is preferably used in an inkjet printing method for printing letters and/or images on sheets of papers by ejecting ink droplets.

### BRIEF DESCRIPTION OF THE DRAWINGS

Fig. 1 is an HPLC chromatogram of a solution of a red pigment (iii) in methanol;
Figs. 2 are graphs showing the changes of the pigment residue ratio with time measured under a daylight fluorescent lamp and in the dark, on monascorubrin, a red pigment (iii), pigments of peaks A to F and a commercially available ink; and
Fig. 3 shows the chemical structure of monascorubrin and the presumed chemical structure of monascorubrin in an alkaline solution.

### THE BEST MODE FOR CARRYING OUT THE INVENTION

### [1] Monascus pigments

The *Monascus* pigments are natural pigments produced by the strains of *Monascus* sp., which are easily discolored and finally lose their colors (decolored) by the irradiation of visible and/or ultraviolet light. The *Monascus* pigments are generally compositions comprising compounds having similar structures with different substituents, such as monascorubrin (red), ankaflavin (yellow), monascin (yellow), and monascorubramine (purple). The *Monascus* pigments for the decolorable inkjet ink of the present invention are different in color tones and chemical structures from indigo to violet blue pigments produced by *Janthinobacterium*.

Compounds categorized in the *Monascus* pigments are classified into water-soluble pigments and oil-soluble pigments by differences in their structures. The *Monascus* pigments have hues such as reddish violet, red, orange, yellow, etc. depending on the differences in compositions. The compositions of *Monascus* pigments change depending on the differences in the culture conditions of *Monascus* and the extraction conditions such as culture medium compositions, culture temperatures and time, etc. Because monascorubrin is rapidly decolored despite its good coloring, and because its decoloration is sensitive to pH, the pigment composition preferably comprises monascorubrin. The content of monascorubrin is preferably 5% or more by weight based on the entire pigment composition (100% by weight).

The strain of *Monascus* producing the *Monascus* pigments may be filamentous fungus of *Monascus* genus, for instance, *Monascus* purpureus (ATCC 16360, a catalog number of the American Type Culture Collection), *Monascus* purpureus (IFO 32228, a catalog number of the Institute for Fermentation, Osaka), *Monascus* pilosus (IFO 4480, a catalog number of IFO), *Monascus* ruber (IFO 9203, a catalog number of IFO) etc., and their varieties and variants.

The culture method of *Monascus* is not particularly limited, and known culture methods may be used. Any culture media may be used as long as they are suitable for the culture of *Monascus*. Usable methods are, for instance, solid culture methods using solid culture media, liquid culture methods using liquid culture media, etc. *Monascus* is inoculated into these culture media, and aerobically cultured at a temperature of 20°C to 40°C for 2 to 14 days. Various types of *Monascus* pigments can be obtained by differences in types of culture media, or separation methods of the *Monascus* pigments from fungal cells. For example, *Monascus* pigment powder is obtained by the solid culture method, and *Monascus* pigment solutions or their organic solvent extracts are obtained by the liquid culture method. The Monascus pigments obtained from Monascus by these methods are so safe that they have been used for food, etc., and harmless to the environment.

### [2] Ink for inkjet printing

The decolorable ink of the present invention for inkjet printing may be any of aqueous inks, oil inks, solid inks at room temperature, etc. for inkjet printing. The term "inks" means "Inks for inkjet printing," unless otherwise mentioned.

### (1) Solvent

Solvents for aqueous inks are mainly selected from water and water-soluble organic solvents depending on desired applications. Preferable examples of the solvents for aqueous inks include alcohols such as methanol, ethanol, propanol, isopropanol, butanol, isobutanol, sec-butanol, t-butanol, pentanol, hexanol, cyclohexanol, benzyl alcohol, etc.; polyalcohols such as ethylene glycol, diethylene glycol, triethylene glycol, polyethylene glycol, propylene glycol, dipropylene glycol, polypropylene glycol, butylene glycol, hexanediol, pentanediol, glycerin, hexanetriol, thiodiglycol, etc.; glycol derivatives such as ethylene glycol monomethyl ether, ethylene glycol monoethyl ether, ethylene glycol monobutyl ether, ethylene glycol diacetate, ethylene glycol monomethyl ether acetate, ethylene glycol monophenyl ether, diethylene glycol monomethyl ether, diethylene glycol monobutyl ether, triethylene glycol monomethyl ether, triethylene glycol monoethyl ether, propylene glycol monomethyl ether, propylene glycol monobutyl ether, dipropylene glycol monomethyl ether, etc.; amines such as ethanolamine, diethanolamine, triethanolamine, N-methyl diethanolamine, N-ethyl diethanolamine, morpholine, N-ethyl morpholine, ethylenediamine, diethylenetriamine, triethylenetetramine, polyethylene-imine, tetramethyl propylene diamine, etc.; polar solvents such as formamide, N,N-dimethyl formamide, N,N-dimethyl acetamide, dimethyl sulfoxide, sulfolane, 2-pyrrolidone, N-methyl-2-pyrrolidone, N-vinyl-2-pyrrolidone, 2-oxazolidone, 1,3-dimethyl-2-imidazolidinone, acetonitrile, acetone, etc. Preferable among them are water, methanol, ethanol, propanol, butanol, and diethylene glycol.

These solvents may be used alone or in combination. When a mixture of water and a water-soluble organic solvent is used, the concentration of the water-soluble organic solvent in the mixture solution is preferably 80% or less by weight.

The *Monascus* pigments may be dissolved in water or a water-soluble organic solvent, or may be dispersed therein with a proper dispersant. The *Monascus* pigments may be finely dispersed by various dispersers such as a ball mill, a sand mill, an attritor, a roll mill, an agitator mill, a Henschel mixer, a colloid mill, a supersonic homogenizer, a pearl mill, a jet mill, an Angmill, etc., with other suitable dispersants (surfactant), if necessary.

Solvents for oil inks are mainly selected from usual organic solvents depending on desired applications. Preferable examples of the solvents for the oil inks include alcohols such as ethanol, pentanol, heptanol, octanol, cyclohexanol, benzyl alcohol, phenylethyl alcohol, phenylpropanol, furfuryl alcohol, anise alcohol, etc.; glycol derivatives such as ethylene glycol monoethyl ether, ethylene glycol monophenyl ether, diethylene glycol monoethyl ether, diethylene glycol monobutyl ether, propylene glycol monoethyl ether, propylene glycol monophenyl ether, dipropylene glycol monomethyl ether, dipropylene glycol monoethyl ether, triethylene glycol monoethyl ether, ethylene glycol diacetate, ethylene glycol monoethyl ether acetate, propylene glycol diacetate, etc.; ketones such as benzyl methyl ketone, diacetone alcohol, cyclohexanone, etc.; ethers such as butyl phenyl ether, benzyl ethyl ether, hexyl ether, etc.; esters such as ethyl acetate, amyl acetate, benzyl acetate, phenylethyl acetate, phenoxyethyl acetate, ethyl phenylacetate, benzyl propionate, ethyl benzoate, butyl benzoate, ethyl laurate, butyl laurate, isopropyl myristate, isopropyl palmitate, triethyl phosphate, tributyl phosphate, diethyl phthalate, dibutyl phthalate, diethyl malonate, dipropyl malonate, diethyl diethylmalonate, diethyl succinate, dibutyl succinate, diethyl glutarate, diethyl adipate, dibutyl adipate, di(2-methoxyethyl) adipate, diethyl sebacate, diethyl maleate, dibutyl maleate, dioctyl maleate, diethyl fumarate, dioctyl fumarate, 3-hexenyl cinnamate, etc.; hydrocarbon solvents such as petroleum ether, petroleum benzine, tetralin, decalin, 1-amylbenzene, dimethylnaphthalene, etc.; polar solvents such as acetonitrile, formamide, N,N-dimethylformamide, N,N-dimethylacetamide, dimethylsulfoxide, sulfolane, propylene carbonate, N-methyl-2-pyrrolidone, N-vinyl-2-pyrrolidone, N,N-diethyl-dodecanamide, etc. These solvents may be used alone or in combination thereof.

The *Monascus* pigments may be dissolved in an organic solvent or dispersed in a proper dispersant. In the cases of the aqueous inks and the oil inks, their viscosities are preferably adjusted to 40 mPa·s or less, with a surface tension of 20 to 100 mN/m.

Solvents for solid inks are properly selected from phase change media, which are solid at room temperature and fluid when heated, depending on the purposes. Preferable examples of the solvents for solid inks include natural waxes such as beeswax, camauba wax, rice wax, Japanese wax, jojoba oil, spermaceti, candelilla wax, lanolin, montan wax, ozocerite, ceresin, paraffm wax, microcrystalline wax, petrolactam, etc.; polyethylene waxes; chlorinated hydrocarbons; organic acids such as palmitic acid, stearyl acid, behenic acid, tiglic acid, 2-acetonaphtho-behenic acid, 1,2-hydroxystearic acid, dihydroxystearic acid, etc.; alcohols such as dodecanol, tetradecanol, hexadecanol, eicosanol, docosanol, tetracosanol, hexacosanol, octacosanol, dodecenol, myricyl alcohol, tetracenol, hexadecenol, eicosenol, docosenol, pinene glycol, hinokiol, butynediol, nonanediol, isophthalyl alcohol, mesicerin, hexanediol, decanediol, tetradecanediol, hexadecanediol, docosanediol, tetracosane diol, terebeneol, phenylglycerin, eicosanediol, octanediol, phenylpropylene glycol, etc.; phenols such as bisphenol A, p-α-cumylphenol, etc.; glycerins of the above organic acids; organic acid esters such as ethylene glycol, diethylene glycol, etc.; cholesterol fatty acid esters such as cholesterol stearate, cholesterol palmitate, cholesterol myristate, cholesterol behenate, cholesterol laurate, cholesterol melissinate, etc.; saccharide fatty acid esters such as saccharose stearate, saccharose palmitate, saccharose behenate, saccharose laurate, saccharose melissinate, lactose stearate, lactose palmitate, lactose behenate, lactose laurate, lactose melissinate, etc.; ketones such as benzoylacetone, diacetobenzene, benzophenone, tricosanone, heptacosanone, heptatriacontanone, hentriacontanone, stearone, laurone, etc.; amides such as oleamide, lauramide, stearamide, ricinolamide, palmitamide, tetrahydrofuramide, erucamide, myristamide, 1,2-hydroxystearamide, N-stearyl erucamide, N-oleyl stearamide, N,N-ethylene bis lauramide, N,N-ethylene bis stearamide, N,N-ethylene bis behenamide, N,N-xylylene bis stearamide, N,N-butylene bis stearamide, N,N-dioleyl adipamide, N,N- dioleyl sebacamide, N,N-distearyl sebacamide, N,N-distearyl terephthalamide, phenacetin, toluamide, acetamide, etc.; sulfonamides such as p-toluene sulfonamide, ethylbenzene sulfonamide, butylbenzene sulfonamide, etc.

When the *Monascus* pigments are dispersed or dissolved in a solid medium in a heated fluid bed, dispersants and binders may also be used. The phase change temperature of the solid medium is preferably 60°C to 200°C, more preferably 80°C to 150°C.

### (2) Dispersant

Surfactants are preferably used as dispersants. The surfactants may be cationic, anionic, ampholytic, or nonionic. Examples of the cationic surfactants include aliphatic amine salts, aliphatic quaternary ammonium salts, benzalkonium salts, benzethonium chloride, pyridinium salts, imidazolium salts, etc.

Examples of the anionic surfactants include fatty-acid soaps, N-acyl-N-methylglycinate, N-acyl-N-methyl-β-alaninate, N-glutamate, acylated peptide, alkyl sulfonate, alkylbenzene sulfonate, alkyl naphthalene sulfonate, dialkyl sulfocuccinate, alkylsulfoacetate, α-olefin sulfonate, N-acylmethyltaurine, sulfonated oil, higher alcohol sulfate, higher secondary alcohol sulfate, alkylether sulfate, higher secondary alcohol ethoxy sulfate, polyoxyethylene alkyl phenyl ether sulfate, monoglysulfate, fatty acid alkylolamide sulfate, alkylether phosphate, alkylphosphate, etc.

Examples of the ampholytic surfactants include carboxybetaine, sulfobetaine, aminocarboxylate, imidazoliumbetaine, etc.

Examples of the nonionic surfactants include polyoxyethylene secondary alcohol ether, polyoxyethylene alkyl phenyl ether, polyoxyethylene sterol ether, polyoxyethylene lanolin derivatives, polyoxyethylene polyoxypropylene alkylether, polyoxyethylene glycerin fatty acid ester, polyoxyethylene castor oil, hardened castor oil, polyoxyethylene sorbitol fatty acid ester, polyethylene glycol fatty acid ester, fatty acid monoglyceride, polyglycerin fatty acid ester, sorbitan fatty acid ester, propylene glycol fatty acid ester, sucrose fatty acid ester, fatty acid alkanolamine, polyoxyethylene fatty acid amides, polyoxyethylene alkylamine, alkylamine oxide, acetylenic glycol, acetylenic alcohol, etc.

### (3) Binder

Examples of binders include water-soluble polymers such as starch, gelatine, casein, gum arabic, sodium alginate, carbomethylcellulose, polyvinyl alcohol, polyvinylpyrrolidone, polyacrylic soda, polyacrylamide, etc.; synthetic resin latexes such as synthetic rubber latex, etc.; organic solvent-soluble resins such as polyvinyl butyral, polyvinyl chloride, polyvinyl acetate, polyacrylonitrile, polymethylmethacrylate, polyvinyl formal, melamine resin, polyamide resin, phenol resin, polyurethane resin, alkyd resin, etc.

### (4) Other additives

Other various additives may be added to the inkjet printing ink of the present invention, if necessary. Examples of the additives include the pH regulators, viscosity regulators, penetrants, surface tension regulators, antioxidants, antiseptics, fungicides, etc. To extend time required for decoloration, light resistance-improving compounds such as histidine-containing peptides described in JP 2000-119549 A may be added.

### (5) Formulation

The content of the *Monascus* pigments is preferably 0.01 to 90% by weight, more preferably 0.5 to 15% by weight, based on the entire weight of the ink composition. This formulation provides inkjet printing with good properties. The content of the above solvent is preferably 1 to 90% by weight based on the entire weight of the ink composition.

### (6) Irradiation conditions and time required for decoloration

The inkjet printing ink of the present invention is discolored and finally loses its color (decolored) by the irradiation of visible and/or ultraviolet light. Thus, prints produced by the ink of the present invention gradually disappear and finally become invisible by the irradiation of visible and/or ultraviolet light. The kinds of visible light and ultraviolet light may be either sunbeam or artificial beam (fluorescent lamps, etc.). Though the intensity of visible light and ultraviolet light largely affects decoloration, and the time required for decoloration also depends on such conditions as the concentration and composition of the *Monascus* pigment, the pH of the ink composition, the materials and pH of papers to be printed, etc. The ink is generally decolored with sunbeam (approximately 1,000,000 lux) in 0.5 to 6 hours. Under the conditions of usual indoor environment with fluorescent lamps (500 to 1000 lux), the decoloration time can be adjusted in a range of 0.5 to 100 hours by selecting the above-described conditions in the ink composition. To cause the decoloration in an extremely short period of time, an irradiation apparatus may be used.

The inkjet printing ink of the present invention, particularly the monascorubrin-containing ink, generally needs a short period of time for decoloration under alkaline conditions (pH: 8 to 12). The lower the pH, the longer time required for decoloration. The pH of the ink is preferably adjusted in a range of 1 to 12, if necessary. The pH can be adjusted by adding an organic or inorganic acid or base. Typical inorganic acids include hydrochloric acid, phosphoric acid, sulfuric acid, etc. Examples of the organic acids include methanesulfonic acid, acetic acid, lactic acid, etc. Examples of the inorganic bases include hydroxides, carbonates, etc. of alkali metals. Examples of the organic bases include ammonia, triethanolamine, tetramethylethylenediamine, etc.

### (7) Hue

The hue of the ink is changed not only by the composition of the *Monascus* pigment but also by the pH as mentioned above. For instance, when a solution of monascorubrin in methanol is used, the hue changes to blue violet under the alkaline conditions (pH: 8 to 12), orange under the approximately neutral conditions (pH: 5 to 7), and yellow under the acidic conditions (pH: 1 to 4). To make both of the decoloration time and the hue constant, it is effective to control the concentration of the *Monascus* pigment, because the pH range of the ink is limited.

### [3] Inkjet printing method

The inkjet printing ink of the present invention is usable in any inkjet printing methods, for instance, a bubble inkjet method, a thermal inkjet method, a supersonic inkjet method, etc.

The ink is generally contained in an ink cartridge. The ink cartridge may be integral with a printer head or independent therefrom. The ink cartridge is mounted to the printing head of a printer, a copier, etc. The inks contained in the cartridge are conveyed to the printing head having a plurality of ink-ejecting orifices. The inks may be conveyed to the ink-ejecting orifices in a liquid state utilizing osmotic pressure or by other conveying mechanisms. Depending on the printing methods, the conveyed inks are ejected from the orifices by heat or a mechanical force. The ejected inks reach a sheet of paper and then are fixed thereto.

Though not particularly restrictive as long as sheets of papers for printing are reusable, they may be any of acid papers, neutral papers and alkaline papers. Because the time required for decoloration depends on the pH of the sheets of papers to be printed, their pH is preferably set at a suitable level. Papers used may contain or be coated with inorganic pigments, hydrophilic binders, matting agents, hardeners, surfactants, polymer latexes, polymer mordants, etc.

Various kinds of additives mentioned above improve properties such as the fixability and absorptivity of the ink, printing thickness, the roundness of printed dots, the sharpness of the peripherals of the dots, the gloss, whiteness and water resistance of prints, the dimensional stability of printed papers in moisture absorption and dehumidification, etc. When papers containing or coated with photocatalysts such as titania, etc. are used, the decoloration of the printed ink can be accelerated. On the other hand, when papers containing or coated with discoloration-preventing agents, the decoloration of the printed ink can be delayed. The sheets to be printed are not limited to papers, but resin sheets, etc. comprising ink fixation layers may be used.

To achieve good printing, in other words, to prevent poor ejection, by suppressing air bubbles from generating in the inkjet printer head and its ink passages, the content of air dissolved in the ink is preferably 70% or less based on the air's saturated dissolution. Because the quality of the *Monascus* pigment easily changes by oxygen, the content of oxygen dissolved in the ink is preferably 30% or less, more preferably 10% or less, based on the oxygen's saturated dissolution. The removal of oxygen from the ink suppresses the deterioration of the *Monascus* pigments by oxidation reaction, making it possible to store the ink while keeping its quality for a long period of time. Usable to remove dissolved oxygen and nitrogen from the inkj et printing ink are known methods such as a deaeration method utilizing hollow fiber membranes (JP 11-209670 A). Deoxidizers may be added to the ink. The storage of the ink is effectively achieved by keeping a container filled with the ink in an aluminum-deposited bag, etc. having high gas barrier and light-blocking properties.

The ink of the present invention for inkjet printing may suitably contain pigments other than the *Monascus* pigment, such as indigo or violet blue pigments produced by fungal cells of microorganisms of *Janthinobacterium* genus, if necessary.

### Example 1

100 mL of a yeast-malt (YM) culture medium comprising 10g of glucose, 3g of a yeast extract (available from Difco Laboratories, Inc.), 3g of a malt extract (available from Difco Laboratories, Inc.), 5g of bactopeptone having pH 6.5 (available from Difco Laboratories, Inc.), was charged into a 500-mL Sakaguchi flask and then subjected to a steam sterilization treatment at 120°C for 20 minutes. One loopful *Monascus* slant culture (*Monascus* purpureus of IFO 32228) was inoculated into this YM culture medium, and then subjected to shake culture at 30°C for 2 days. Its culture liquid was fragmentized by a Warring blender at 10,000 rpm for 1 minute to obtain an inoculum liquid. 5 mL of the resultant inoculum liquid was inoculated into 100 mL of the YM culture medium sterilized in the same manner as described above, and then main culture was conducted by shaking at 30°C for 2 days. After the main culture ended, the culture liquid was centrifuged to separate a supernatant from fungal cells. The supernatant was condensed and dried to obtain a water-soluble red pigment (i).

The resultant red pigment (i) was dissolved in distilled water to prepare a pigment solution having such a concentration as to provide absorbance of 0.2 at a wavelength of 500 nm when diluted to one-1000th. After adding 5 parts by weight of diethylene glycol and 5 parts by weight of propanol to 90 parts by weight of the pigment solution, the resultant mixture was filtrated by a 0.45-µm-thick filter to obtain an ink with the concentration of the red pigment (i) of 4% by weight.

With a cartridge filled with this ink, printing was conducted on white, bright, recycled papers available from Fuji Xerox Co., Ltd. by an inkjet printer BJC-600J available from Canon Inc. The printed papers were exposed to a daylight fluorescent lamp at a position of 4200 lux, 15 cm below the lamp. As a result, it was confirmed that the prints were decolored by exposure for 20 hours. On the other hand, when papers printed in the same manner as above were placed in the dark (1 lux or less), no changes were observed in prints.

### Example 2

*Monascus* purpureus (IFO 32228) was cultured in a Sakaguchi flask in the same manner as in Example 1. After the culture ended, 50 mL of ethanol was added to the culture liquid, which was then subj ected to shake culture at room temperature for 30 minutes. It was centrifuged to remove a supernatant. With 50 mL of ethanol further added to the fungal cells, it was centrifuged to remove a supernatant. Both supernatants were mixed and condensed to a dry state to obtain a red pigment (ii) comprising water-soluble pigments and oil-soluble pigments.

The resultant red pigment (ii) was dissolved in a 50-%-by-weight aqueous ethanol solution to prepare a pigment solution having the concentration of the red pigment (ii) of 4% by weight, which had absorbance of 0.2 at a wavelength of 500 nm when diluted to one-1000th. The resultant pigment solution was used to prepare ink and printed on papers in the same manner as in Example 1. The printed papers were exposed to a daylight fluorescent lamp at a position of 4200 lux, 15 cm below the lamp. As a result, the prints were decolored by exposure for 20 hours. On the other hand, when papers printed in the same manner as above were placed in the dark (1 lux or less), no changes were observed in prints.

### Example 3

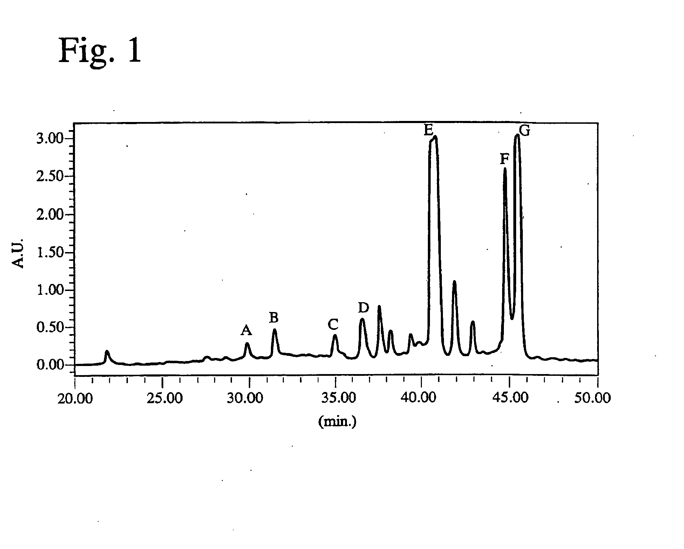

*Monascus* purpureus (IFO 32228) was cultured in a Sakaguchi flask in the same manner as in Example 1. After the culture ended, 50 mL of butanol was added to the culture liquid, which was then subjected to shake culture at 30°C for 2 hours. It was centrifuged to separate a water layer from a butanol layer. The butanol layer was condensed to a dry state to obtain a red pigment (iii), which was dissolved in methanol and subjected to composition analysis by high-performance liquid chromatography (HPLC). The column used was CAPCELL PAK C 18 available from Shiseido Co., Ltd. having an inner diameter of 4.6 mm and a length of 250 mm, and the mobile phase was water/acetonitrile at a ratio of 85/25 after 0 minute, 0/100 after 42 minutes, and 0/100 after 60 minutes. The flow rate was 1 mL/minute, and the detection wavelength was 400 nm. The measurement results are shown in Fig. 1.

It is clear from Fig. 1 that the red pigment (iii) was a mixture composition. Pigments corresponding to the peaks A to G shown in Fig. 1 were analyzed, and then separated to each pigment and dried. Unless otherwise mentioned, the pigments corresponding to the peaks A to G shown in Fig. 1 are referred to as the pigments of peaks A to G. The pigment of peak G was identified as monascorubrin by visible/ultraviolet light absorption spectrum analysis, mass spectrometry (MS) and NMR.

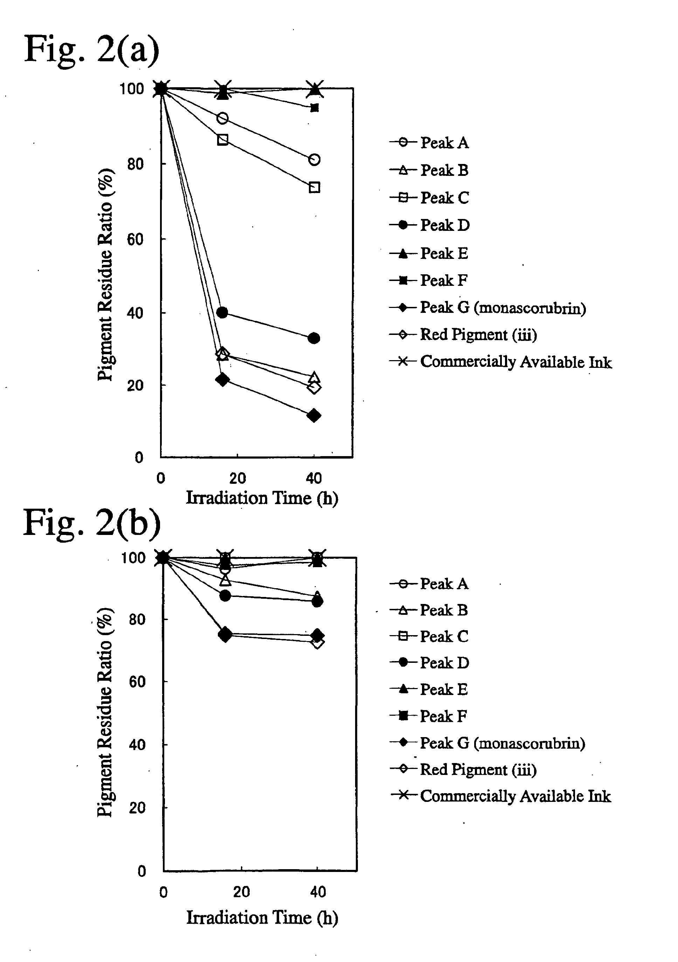

Each of the red pigment (iii), monascorubrin, the pigments of peaks A to F and the magenta ink JK-620 commercially available from Kabushiki Kaisha Actis Okamoto was dissolved in methanol to prepare an ink having absorbance of 1 at a wavelength of 500 nm. Each ink was charged into a screw-capped glass bottle, which was placed at a position of 2000 lux, 25 cm under a daylight fluorescent lamp. The absorbance of each ink at a wavelength of 500 nm was measured at the beginning of exposure, after 16 hours and after 40 hours, respectively. The pigment residue ratio (the ratio of a remaining pigment) at each measurement time was examined and expressed by percentage based on absorbance (100%) at the start of exposure. The results are shown in Fig. 2(a). As is clear from Fig. 2(a), the pigment residue ratio after 40 hours was low in most *Monascus* pigments, while it was 100% in the commercially available ink. Monascorubrin was subjected to particularly remarkable decoloration.

The pigment residue ratio was examined 16 hours and 40 hours after each ink was placed in the dark (1 lux or less). The results are shown in Fig. 2(b). As is clear from Fig. 2(b), the ratio of the remaining *Monascus* pigment was 70% or more after 40 hours.

### Example 4

A diluted aqueous sodium hydroxide solution or diluted hydrochloric acid was added in an amount of 10 µL each to 1 mL of methanol, to prepare a methanol solution with each pH shown in Table 1. monascorubrin prepared in Example 3 was dissolved in each methanol solution, such that the amount of monascorubrin was the same as that of the methanol solution. Each of the resultant monascorubrin solutions was diluted with a methanol solution having the same pH as that of each monascorubrin solution to prepare nine kinds of inks. The concentration of monascorubrin in each ink was adjusted such that the absorbance of the ink was 1.0 at a wavelength of 500 nm when diluted with methanol to one-100th. With respect to the red pigment (iii), too, nine kinds of inks were prepared in the same manner.

Spot printing was conducted with 18 kinds of inks in total on white, bright, recycled papers available from Fuji Xerox Co., Ltd. Decoloration was observed by the naked eye on the spot-printed papers placed at a position of 2,000 lux, 25 cm under a daylight fluorescent lamp. Table 1 shows the time required for decoloration.

**Table 1**

| Pigment | Time Required for Decoloration (hours) at | | | | | | | | |
|---|---|---|---|---|---|---|---|---|---|
| | pH 1 | pH 3 | pH 5 | pH 7 | pH 8 | pH 9 | pH 10 | pH 11 | pH 12 |
| Monascorubrin | 48 | 48 | 20 | 20 | 18 | 18 | 10 | 10 | 5 |
| Red Pigment (iii) | 48 | 24 | 24 | 24 | 20 | 20 | 18 | 18 | 10 |

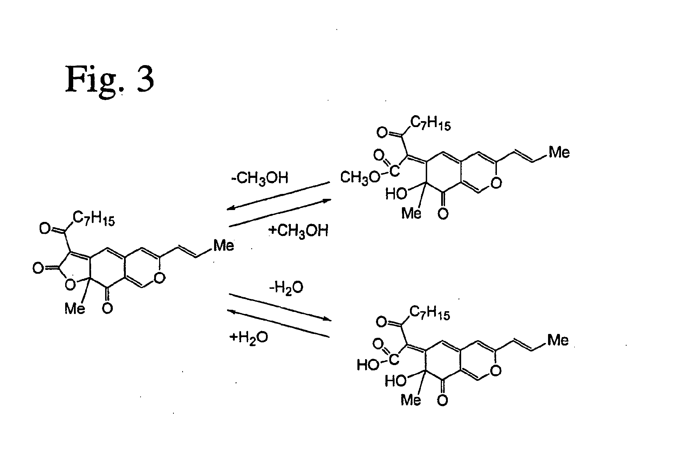

The spot printings by the ink containing monascorubrin or the red pigment (iii) were rapidly decolored in a neutral to alkaline range. The degree of decoloration was remarkable in monascorubrin. The decoloration of monascorubrin was particularly sensitive to the pH. It is thus considered that the lactone ring of monascorubrin opened in an alkaline solution (see Fig. 3).

### Example 5

Monascorubrin prepared in Example 3 was dissolved in methanol to have an absorbance of 1.0 at a wavelength of 500 nm. 900 µL of the resultant solution was charged into each of three tubes. 10 µL of 0.1-N hydrochloric acid was added to one of the three tubes to prepare an ink of pH 4.7, 10 µL of water was added to another tube to prepare an ink of pH 7.2, and an aqueous 0.1-N sodium hydroxide solution was added to the last tube to prepare an ink of pH 9.2. Each of the resultant inks was charged into two screw-capped bottles. One bottle was placed at a position of 2000 lux, 25 cm under a daylight fluorescent lamp, and the other bottle was placed in the dark (1 lux or less). The pigment residue ratio after exposure for 16 hours was examined in the same manner as in Example 3 with respect to the inks in each bottle. The results are shown in Table 2.

**Table 2**

| Conditions | Pigment Residue Ratio (%) | | |
|---|---|---|---|
| | pH 4.7 | pH 7.2 | pH 9.2 |
| Exposed to light for 16 hours | 99.7 | 30.2 | 26.2 |
| For 16 hours in dark | 98.1 | 91.3 | 100 |

When placed in the dark, the inks of any pH were 90% or more in the pigment residue ratio. The alkaline ink was particularly excellent in storability. When exposed to light, on the other hand, the alkaline ink was particularly low in the pigment residue ratio and thus quick in decoloration.

### Example 6

The red pigment (iii), monascorubrin prepared in the same manner as in Example 3, and the pigments of peaks A to D were respectively dissolved in methanol to prepare each pigment solution without pH adjustment. Each pigment solution was diluted with methanol to prepare an ink having an absorbance of 1.0 at a wavelength of 500 nm when diluted to one-100th. Each ink was spot-printed on white, bright, recycled papers available from Fuji Xerox Co., Ltd. The alkaline ink of monascorubrin prepared in the same manner as in Example 5 was also spot-printed.

Each of printed papers was placed at a position of 2,000 lux, 25 cm under a daylight fluorescent lamp, to continuously observe the disappearance of colors. The pigment residue ratio was measured by the naked eye and expressed by percentage based on the amount (100%) of the pigment before exposure to light. Table 3 shows the time required for the pigment residue ratios of 50%, 20% and 0%, respectively.

**Table 3**

| Pigment | Time Required for Achieving Pigment Residue Ratio Below (hours) | | |
|---|---|---|---|
| | 50% | 20% | 0% |
| Red Pigment (iii) | 10 | 20 | 24 |
| Pigment of Peak A | 15 | 20 | 24 |
| Pigment of Peak B | 10 | 20 | 24 |
| Pigment of Peak C | 15 | 20 | 24 |
| Pigment of Peak D | 15 | 20 | 24 |
| Monascorubrin | 3 | 15 | 20 |
| Monascorubrin⁽¹⁾ | 1 | 10 | 18 |
| Note: (1) pH 9.2. | | | |

The spot printing with the monascorubrin-containing ink was decolored after it passed 20 hours, quickest among those measured. The decoloration was remarkable particularly in the alkaline ink.

### Example 7

*Monascus* pilosus (IFO 4480) was cultured under the same culture conditions as in Example 1. After the culture ended, the culture liquid was centrifuged to separate a supernatant from fungal cells. The supernatant was condensed and dried to obtain a red pigment (iv). The red pigment (iv) was used to prepare ink having a concentration of the red pigment (iv) of 4% by weight, which was printed on papers in the same manner as in Example 1. The printed papers were placed at a position of 4200 lux, 15 cm under a daylight fluorescent lamp. Observation after 20 hours of exposure to light revealed that the prints were decolored. When placed in the dark (1 lux or less), on the other hand, no changes were observed on the papers printed in the same manner.

### Example 8

*Monascus* ruber (IFO 9203) was cultured in the same culture conditions as in Example 1. After the culture ended, the culture liquid was centrifuged to separate a supernatant from fungal cells. The supernatant was condensed and dried to obtain a red pigment (v). The red pigment (v) was used to prepare ink having a concentration of the red pigment (v) of 4% by weight, which was printed on papers in the same manner as in Example 1. The printed papers were placed at a position of 4200 lux, 15 cm under a daylight fluorescent lamp. Observation after 20 hours of exposure to light revealed that the prints were decolored. When placed in the dark (1 lux or less), on the other hand, no changes were observed on the papers printed in the same manner:

As described above in detail, prints produced by the decolorable ink of the present invention are rapidly decolored by the irradiation of visible and/or ultraviolet light, while they are free from change as long as they are stored in the dark. Because the decolorable ink of the present invention contains natural pigments, it is totally harmless to the environment and safe for humans. Monascorubrin is particularly suitable for the decolorable ink of the present invention among the *Monascus* pigments, because it is rapidly decolored with high sensitivity to pH.

## Claims

1. A decolorable ink for inkjet printing comprising a *Monascus* pigment.

2. The decolorable ink for inkjet printing according to claim 1, wherein said ink is decolored by the irradiation of visible light.

3. The decolorable ink for inkjet printing according to claim 1 or 2, wherein said ink is decolored by the irradiation of ultraviolet light.

4. The decolorable ink for inkjet printing according to any one of claims 1 to 3, wherein said *Monascus* pigment comprises an oil-soluble pigment and/or a water-soluble pigment.

5. The decolorable ink for inkjet printing according to any one of claims 1 to 4, wherein said *Monascus* pigment contains monascorubrin.

6. A method for inkjet-printing letters and/or images on a sheet of a paper by ejecting droplets of the decolorable ink recited in any one of claims 1 to 5.
